Europäisches Patentamt

European Patent Office

Office européen des brevets

(19)

(11) Numéro de publication : **0 168 276 B1**

(12) **FASCICULE DE BREVET EUROPÉEN**

(45) Date de publication du fascicule du brevet :
23.03.88

(51) Int. Cl.⁴ : **A 23 P   1/12**, A 23 P   1/14

(21) Numéro de dépôt : **85401049.3**

(22) Date de dépôt : **28.05.85**

(54) Filière d'extrusion de produits alimentaires fourrés.

(30) Priorité : **08.06.84 FR 8408997**

(43) Date de publication de la demande :
**15.01.86 Bulletin 86/03**

(45) Mention de la délivrance du brevet :
**23.03.88 Bulletin 88/12**

(84) Etats contractants désignés :
**CH DE GB LI NL**

(56) Documents cités :
**EP-A- 0 071 183
DE-A- 2 317 696
GB-A- 1 604 586
US-A- 3 480 445**

(73) Titulaire : **CLEXTRAL
Tour Fiat 1 place de la Coupole
F-92400 Courbevoie (FR)**

(72) Inventeur : **Chapet, Marc
41 rue Emile Zola
F-42240 Unieux (FR)**

(74) Mandataire : **Polus, Camille et al
c/o Cabinet Lavoix 2, Place d'Estienne d'Orves
F-75441 Paris Cedex 09 (FR)**

## Description

La présente invention se rapporte à une filière d'extrusion de produits alimentaires fourrés du genre biscuits salés ou sucrés.

La fabrication de ce genre de produits alimentaires par extrusion est généralement réalisée dans un cuiseur-extrudeur où un mélange humidifié de matières farinacées, introduit dans l'extrudeuse, est soumis par une ou deux vis rotatives à un travail mécanique à des températures et pressions élevées, puis extrudé à travers une filière d'extrusion vers l'atmosphère. Cette matière, qui constitue la couche externe du produit, sort de la filière où elle se dilate sous une forme allongée et poreuse du fait de la chute de pression à travers la filière et de l'extraction rapide de l'eau sous forme de vapeur.

La couche interne ou fourrage constitué par des protéines, par exemple chocolat, graisse, végétaline ou matière analogue, est injectée dans le centre de la matière chaude et sous pression lors de son passage à travers la filière d'extrusion, par une tubulure d'injection qui est montée concentriquement avec la filière, si bien que la couche interne se dépose dans la matière externe, formant ainsi un produit fourré. Le produit est ensuite coupé en morceaux d'une dimension souhaitée.

Mais l'introduction du fourrage formé par une matière délicate et molle pose bien souvent des problèmes. En effet, la matière externe, en sortant de l'extrudeuse, pénètre dans la filière d'extrusion à une température sensiblement supérieure à 100 °C ce qui entraîne une échauffement important du fourrage au moment de son introduction. Or, ce fourrage ne doit pas être porté à une température trop élevée si l'on veut qu'il conserve, pour certains d'entre eux, les qualités désirées, et surtout pour éviter qu'il devienne trop liquide et coule au moment de la coupe du produit.

Le brevet EP-A-0 071 183 décrit une filière d'extrusion dans laquelle la matière externe est introduite perpendiculairement au conduit d'alimentation du fourrage. Au niveau de la sortie de la matière externe, cette filière comporte un espace annulaire permettant d'aspirer les vapeurs produites au moment de l'extrusion de ladite matière externe.

Un manchon crée une isolation partielle entre la matière externe et le fourrage interne, mais le fourrage ne subit aucun refroidissement.

Le brevet US-A-3 480 445 se rapporte à la fabrication d'un produit fourré par extrusion. Le fourrage étant directement introduit dans le cuiseur-extrudeur, un dispositif de refroidissement est prévu entre la matière externe et le fourrage.

Compte tenu des échanges thermiques entre les différentes pièces, le refroidissement agit également sur la matière externe.

La présente invention vise à remédier à ces inconvénients et a pour objet une filière d'extrusion permettant la production de produits alimentaires fourrés.

L'invention se rapporte donc à une filière d'extrusion comprenant :

— une chambre interne communiquant par un orifice d'entrée avec le cuiseur-extrudeur et par un orifice de sortie avec un alésage prévu à l'intérieur d'un embout d'extrémité qui coiffe ledit orifice de sortie pour définir un canal continu d'extrusion du mélange provenant du cuiseur-extrudeur,

— et une buse d'injection, montée concentriquement dans la chambre interne et l'alésage de l'embout d'extrémité, comportant un conduit central cylindrique qui se prolonge par un poinçon tubulaire creux, pour l'amenée du fourrage.

Suivant l'invention, la filière d'extrusion comprend des moyens de refroidissement et d'isolation formant écran thermique entre le mélange sortant du cuiseur-extrudeur à une température élevée et le fourrage introduit dans le conduit central de la buse d'injection.

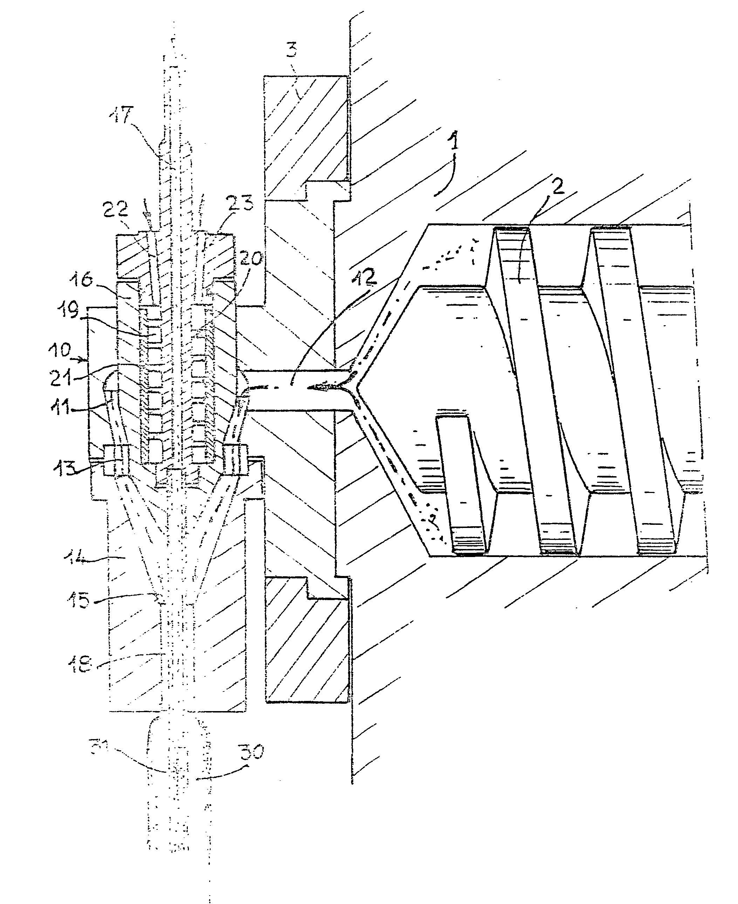

On décrira à présent une forme de réalisation préférée de l'invention, en référence au dessin unique annexé, qui représente, en coupe longitudinale, unè filière d'extrusion conforme à l'invention.

Le cuiseur-extrudeur dont on a représenté sur la figure unique seulement l'extrémité de sortie, comprend essentiellement un fourreau allongé 1 enveloppant une ou plusieurs vis 2 entraînées en rotation.

Une filière d'extrusion 10 est fixée sur l'extrémité du fourreau 1 par l'intermédiaire d'une bride 3. Cette filière d'extrusion 10 est conçue de telle façon que le produit fini soit dirigé selon une direction perpendiculaire à l'axe du cuiseur-extrudeur. A cet effet, la filière 10 comporte une chambre interne 11 communiquant avec l'intérieur du fourreau 1 par un orifice d'entrée 12 disposé dans l'axe de la vis 2, et dont l'orifice de sortie 13 est orienté selon un axe perpendiculaire à l'axe de l'orifice d'entrée 12. D'autre part, la filière d'extrusion 10 se prolonge vers l'extérieur par un embout d'extrémité 14 interchangeable, coiffant l'orifice de sortie 13, et muni d'un alésage 15 ayant une première partie évasée, puis se terminant par une partie cylindrique.

Une buse d'injection 16 est montée concentriquement dans la chambre 11 de la filière d'extrusion 10 pour délivrer le fourrage, sous pression, à l'intérieur du mélange qui est transféré à travers ladite filière d'extrusion. Pour cela, la buse d'injection 16 comporte, sur toute sa longueur, un conduit central cylindrique 17 qui se prolonge par un poinçon tubulaire creux 18 de forme circulaire ou ovoïde, traversant l'alésage 15 de l'embout d'extrémité 14. L'extrémité de ce poinçon tubulaire 18 dépasse de la face frontale de l'embout 14.

Au niveau de l'entrée du mélange dans la filière d'extrusion 10, la buse d'injection 16 comporte, autour du conduit 17, des moyens de refroidissement et d'isolation pour éviter un échauffement trop important du fourrage à l'intérieur du conduit 17. Ces moyens sont constitués d'une part par un canal longitudinal 19 muni intérieurement d'une double hélice 20 dans lequel circule un fluide de refroidissement, et d'autre part par une bague isolante 21 entourant le canal longitudinal 19. Enfin, le canal 19 est raccordé par une petite conduite 22 avec un dispositif, non représenté, d'alimentation en fluide de refroidissement et comporte une petite conduite 23 d'évacuation dudit fluide de refroidissement.

Un mélange dilatable de matières humidifiées farinacées, constituant la couche externe du produit, est introduit dans le cuiseur-extrudeur, où il subit, à l'intérieur du fourreau 1 par la vis 2, un travail mécanique à une température et une pression élevées. Le mélange, dont la température à la sortie du cuiseur-extrudeur est sensiblement supérieure à 100 °C, est extrudé dans l'orifice d'entrée 12 de la chambre interne 11 de la filière d'extrusion 10. Puis il passe, sous une pression élevée dans la chambre 11 et dans l'alésage 15 de l'embout d'extrémité 14. Tandis que le mélange émerge de l'embout 14 sous la haute pression interne, vers l'atmosphère, l'humidité surchauffée s'échappe partiellement par évaporation ce qui provoque sa dilatation. A la sortie de la filière d'extrusion 10 le mélange constitue donc la couche externe 30 du produit. Simultanément, le fourrage 31 injecté dans le conduit 17 de la buse 16, pénètre dans le poinçon tubulaire 18 et vient se répandre à l'intérieur de la couche externe pour former un produit fourré.

Le produit fourré ainsi obtenu est ensuite coupé en morceaux d'une longueur souhaitée par exemple par un couteau rotatif, non représenté, qui est monté adjacent à l'extrémité d'évacuation de la filière d'extrusion.

Le fluide de refroidissement en circulation dans le canal longitudinal 19 de la buse d'injection 16 forme, avec la bague isolante 21, un écran thermique entre la matière sortant du cuiseur-extrudeur à une température élevée et le fourrage interne. Le fourrage est donc maintenu à une température relativement basse ce qui permet d'éviter notamment qu'il coule au moment de la coupe du produit et, pour certain d'entre eux, qu'il subisse une dégradation due à un échauffement trop important.

Par ailleurs, l'orientation de la filière d'extrusion à 90° par rapport à la sortie du cuiseur-extrudeur permet une alimentation du fourrage suivant un conduit rectiligne facilitant ainsi son écoulement et son introduction dans la matière externe.

**Revendications**

1. Filière d'extrusion pour la production, à partir d'un cuiseur-extrudeur, de produits alimentaires fourrés comprenant :

— une chambre interne (11) communiquant par un orifice d'entrée (12) avec le cuiseur-extrudeur (1, 2) et par un orifice de sortie (13) avec un alésage (15) prévu à l'intérieur d'un embout d'extrémité (14) qui coiffe ledit orifice de sortie pour définir un canal continu d'extrusion du mélange provenant du cuiseur-extrudeur,

— et une buse d'injection (16), montée concentriquement dans la chambre interne (11) et l'alésage (15), comportant un conduit central cylindrique (17) qui se prolonge par un poinçon tubulaire creux (18), pour l'amenée du fourrage, caractérisée par le fait qu'elle comprend, au niveau de l'introduction du mélange sortant du cuiseur-extrudeur (1, 2) à une température élevée, des moyens de refroidissement et d'isolation (19, 21) formant écran thermique entre ledit mélange et le fourrage introduit dans le conduit central (17) de la buse d'injection (16).

2. Filière d'extrusion selon la revendication 1, caractérisée par le fait que les moyens de refroidissement et d'isolation sont prévus dans la buse d'injection (16) autour du conduit central (17), au niveau de la chambre interne (11).

3. Filière d'extrusion selon les revendications 1 et 2, caractérisée par le fait que les moyens de refroidissement et d'isolation sont formés par un canal longitudinal (19) muni intérieurement d'une double hélice (20) dans lequel circule un fluide de refroidissement et d'une bague isolante (21) entourant ledit canal longitudinal.

**Claims**

1. An extrusion die for producing filled food products from a cooker-extruder comprising :

— an internal chamber (11) communicating via an inlet opening (12) with the cooker-extruder (1, 2) and via an outlet opening (13) with a bore (15) provided inside an end element (14) which caps said outlet opening to define a continuous extrusion passageway for the mixture coming from the cooker-extruder ;

— and an injection nozzle (16) mounted concentrically in the internal chamber (11) and the bore (15), comprising a cylindrical central conduit (17) which is extended by a hollow tubular plunger (18) for supplying the filling characterised in that it comprises, in the region where the mixture leaving the cooker-extruder (1, 2) is introduced at a high temperature, cooling and insulating means (19, 21) forming a thermal shield between said mixture and the filling introduced into the central conduit (17) of the injection nozzle (16).

2. An extrusion die according to claim 1, characterised in that the cooling and insulating means are provided in the injection nozzle (16) round the central conduit (17) in the region of the internal chamber (11).

3. An extrusion die according to claims 1 and 2, characterised in that the cooling and insulating means are formed by a longitudinal passageway (19) provided internally with a double helix (20) in which a coolant circulates and with an insulating ring (21) surrounding said longitudinal passageway.

## Patentansprüche

1. Extrudierdüse für die Herstellung von gefüllten Nahrungsmitteln, mit Hilfe eines Extruder-Kochapparates, mit :

— einer inneren Kammer (11), die über eine Einlaßöffnung (12) mit dem Extruder-Kochapparat (1, 2) verbunden ist und über eine Ausgangsöffnung (13) mit einer Bohrung (15) in Verbindung steht, die im Inneren eines Endstücks (14) vorgesehen ist, das auf die Ausgangsöffnung gesteckt ist, um einen kontinuierlichen Extrusionskanal für die Mischung zu bilden, die aus dem Extruder-Kochapparat stammt, und

— einer Spritzdüse (16), die konzentrisch in der Innenkammer (11) und der Bohrung (15) angeordnet ist und einen zentralen zylindrischen Kanal aufweist, der durch eine hohle, zylinderförmige Dornstange (18) verlängert wird, die zur Förderung der Füllung dient, gekennzeichnet durch im Bereich der Einführung der aus dem Extruder-Kochapparat (1, 2) mit einer hohen Temperatur austretenden Mischung angeordneten Kühl- und Isoliermittel (19, 21), die eine thermische Abschirmung zwischen der Mischung und der in dem zentralen Kanal (17) der Einspritzdüse (16) eingeführten Füllung bilden.

2. Extrudierdüse nach Anspruch 1, dadurch gekennzeichnet, daß die Kühl- und Isoliermittel in der Einspritzdüse (16) um den zentralen Kanal (17) herum im Bereich der inneren Kammer (11) angeordnet sind.

3. Extrudierdüse nach den Ansprüchen 1 und 2, dadurch gekennzeichnet, daß die Kühl- und Isoliermittel aus einem Längskanal (19) gebildet werden, der innen mit einer doppelten Spirale (20) versehen ist, in der das Kühlmittel fließt und mit einer Isolierhülse (21), die den Längskanal ummantelt.

0 168 276

1